**Europäisches Patentamt**

**European Patent Office**

**Office européen des brevets**

(19)

(11) **EP 0 795 841 A2**

(12) **EUROPÄISCHE PATENTANMELDUNG**

(43) Veröffentlichungstag:
 **17.09.1997 Patentblatt 1997/38**

(51) Int. Cl.⁶: $G06T\ 9/00$

(21) Anmeldenummer: **97103459.0**

(22) Anmeldetag: **03.03.1997**

(84) Benannte Vertragsstaaten:
 **DE FR GB IT**

(30) Priorität: **13.03.1996 DE 19609859**

(71) Anmelder: **SIEMENS AKTIENGESELLSCHAFT**
 **80333 München (DE)**

(72) Erfinder: **Kaup, Andre, Dr.**
 **85635 Höhenkirchen (DE)**

(54) **Verfahren zur Bildung einer Bild-Tranformationsmatrix**

(57) Es wird für ein Bildsegment (S) eines digitalen Bildes (B) für die Bildpunkte (BP) des Bildsegments (S) eine vorgebbare Scan-Reihenfolge bestimmt, anhand derer eine Kovarianzmatrix (R) für die Bildpunkte (BP) des Bildsegments (S) entsprechend der Scan-Reihenfolge ermittelt wird. Eine Bild-Transformationsmatrix ($\underline{A}^T$) ergibt sich aus der Kovarianzmatrix durch die Eigenvektoren der Kovarianzmatrix (R).

**FIG 2**

EP 0 795 841 A2

**Beschreibung**

Die Codierung von Videosignalen entsprechend beispielsweise den Bildcodierungs-Standards H.261, H.263, MPEG1 sowie MPEG2 basiert häufig auf einer blockorientierten diskreten Cosinustransformation (DCT). Diese blockorientierten Codierungsverfahren eignen sich jedoch nicht mehr für Bildcodierungsverfahren, die nicht mehr auf rechteckigen Blöcken basieren, sondern in denen beispielsweise Objekte aus einem Bild segmentiert werden und die Segmente des Bildes codiert werden. Diese Verfahren werden als regionenbasierte oder objektbasierte Bildcodierungsverfahren bezeichnet. Dabei erfolgt eine Segmentierung von in digital vorliegenden Bildern entsprechend der in der Szene vorkommenden Objekte. Es wird eine separate Codierung dieser segmentierten Objekte anstelle der Codierung von Bildblöcken wie bei blockbasierten Bildcodierungsverfahren durchgeführt. Dabei erfolgt üblicherweise die Codierung durch Modellierung der segmentierten Objekte und anschließende Übertragung der Modellierungsparameter dieser segmentierten Objekte.

Nach der Übertragung der Bildinformation von einem Sender zu einem Empfänger werden die einzelnen Objekte des Bildes im Empfänger anhand der übertragenen Modellierungsparameter wieder rekonstruiert.

Eine Möglichkeit zur Modellierung der Objekte besteht in einer Reihenentwicklung der Bildfunktion nach einer Menge von geeignet gewählten Basisfunktionen. Die Modellierungsparameter entsprechen dann den Entwicklungskoeffizienten dieser Bildfunktion. Eine solche Modellierung des Bildes ist Grundlage der Transformationscodierung. Sollen einzelne, beliebig berandete Objekte des Bildes codiert werden, ist eine Transformation für Segmente mit beliebiger, in der Regel nicht konvexer Berandung erforderlich.

Für eine solche Transformation existieren bisher zwei grundsätzliche Ansätze.

In dem Verfahren, welches in dem Dokument [1] beschrieben wird, wird das gegebene Bildsegment zunächst in ein umschreibendes Rechteck kleinstmöglichen Ausmaßes eingebettet. Zu diesem Reckteck kann eine diskrete Cosinustransformation (DCT) angegeben werden, die vollständig durch die Basisfunktionen der Transformation spezifiziert ist. Um diese Transformation an die Segmentform anzupassen, werden die auf dem Rechteck definierten Basisfunktionen nacheinander bezüglich der Form des Segmentes orthogonalisiert. Die resultierenden orthogonalen, formabhängigen Basisfunktionen bilden dann die gesuchte segementangepasste Transformation.

Ein Nachteil dieses Lösungsansatzes ist darin zu sehen, daß ein hoher Bedarf an Rechenleistung und an Speicherplatz zur Durchführung dieses Verfahrens vorhanden ist. Ferner weist dieses bekannte Verfahren den Nachteil auf, daß über die Eignung der resultierenden Transformation zur Datenkompression keine sicheren Aussagen getroffen werden können, da die Transformation wesentlich von der Orthogonalisierungsreihenfolge, und damit von der speziellen Implementierung, abhängt.

In dem Dokument [2] ist ein Verfahren beschrieben, bei dem das gegebene Bildsegment getrennt nach Zeilen und Spalten transformiert wird. Dazu werden zunächst alle Zeilen des Bildsegments links ausgerichtet und nacheinander einer eindimensionalen horizontalen Transformation unterzogen, deren Transformationslänge jeweils der Zahl der Bildpunkte in der entsprechenden Zeile entspricht. Die resultierenden Koeffizienten werden anschließend ein weiteres Mal in vertikaler Richtung transformiert.

Dieses Verfahren birgt insbesondere den Nachteil in sich, daß die Korrelationen der Helligkeitswerte der Bildpunkte (Ähnlichkeiten der Bildpunkte) aufgrund der Umsortierung der Bildpunkte nicht vollständig ausgenutzt werden können.

Zur Verbesserung dieses aus dem Dokument [2] bekannten Verfahrens wird in dem Dokument [3] ein Verfahren beschrieben, bei dem eine für ein einfaches Bildmodell angepasste Transformation für konvexe Bildsegmentformen durchgeführt wird. Hierbei sind allerdings nur solche Bildsegmentformen zugelassen, die beim Durchlaufen von Zeilen oder Spalten keine Unterbrechungen (Löcher) aufweisen.

Ein erheblicher Nachteil, der beiden bekannten Lösungsansätze zugrundeliegt, besteht darin, daß die Energiekonzentration in den Koeffizienten geringer ausfällt als bei einer optimalen Ausnutzung aller linearen Korrelationen. Verantwortlich dafür sind bei dem aus dem Dokument [1] bekannten Verfahren die ungünstig gewählten Basisfunktionen, bei dem Verfahren aus Dokument [2] die Umsortierung der Bildpunkte und bei dem Verfahren aus dem Dokument [3] die Beschränkung auf konvexe Bildregionen.

Als Folge hieraus erreichen die beschriebenen bekannten Verfahren bei einer gegebenen Datenrate nicht die bestmögliche Bildqualität gemessen am Signal/Rauschleistungs-Verhältnis.

Ferner sind verschiedene Möglichkeiten zur Ermittlung der Eigenvektoren einer Kovarianzmatrix bekannt, beispielsweise aus dem Dokument [4].

Verschiedene bekannte Bildtransformationsverfahren sind in [5] beschrieben.

Aus der Druckschrift [6] ist die sog. Karhunen-Loeve-Transformation bekannt. Aus der Druckschrift [7] ist die sog. Hauptachsentransformation bekannt.

Der Erfindung liegt das Problem zugrunde, ein Verfahren zur Bildung einer Bildtransformationsmatrix anzugeben, mit dem gegenüber dem bekannten Verfahren ein verbessertes Signal/Rauschverhältnis erzielt wird.

Das Problem wird durch das Verfahren gemäß Patentanspruch 1 gelöst.

Hierbei wird für jedes Bildsegment beliebiger Form eine Scan-Reihenfolge zum Scannen der einzelnen Bildpunkte, die das jeweilige Bildsegment aufweist, bestimmt. Entsprechend der Scan-Reihenfolge wird eine Kovarianzmatrix für die Bildpunkte gebildet und nach einer Ermittlung der Eigenvektoren für die Kovarianzmatrix ergibt sich die erfindungsgemäße Bild-Transformationsmatrix aus den Eigenvektoren der Kovarianzmatrix.

Die auf die erfindungsgemäße Weise gebildete Bild-Transformationsmatrix hat die Eigenschaft, daß die einzelnen Bildpunkte des Bildsegmentes optimal durch die mit der Bild-Transformationsmatrix durchgeführte Transformation vollständig linear dekorreliert werden. Ein weiterer Vorteil des erfindungsgemäßen Verfahrens ist darin zu sehen, daß für eine gegebene Datenrate das Signal/Rauschleistungs-Verhältnis gegenüber den bekannten Transformationen erheblich verbessert wird.

Vorteilhafte Weiterbildungen des Verfahrens ergeben sich aus den abhängigen Ansprüchen.

Es ist vorteilhaft, die Elemente der Kovarianzmatrix nach der Vorschrift $R(x_{ij}, x_{kl}) = r^{|i-k|+|j-l|}$ zu bilden, da auf diese Weise eine Entkopplung der einzelnen Richtungen der Berechnung der Elemente der Kovarianzmatrix möglich ist. Auf diese Weise wird auch eine Parallelisierung der Durchführung der Bildung der Kovarianzmatrix und somit eine erhebliche Beschleunigung der Durchführung des Verfahrens durch einen Rechner erreicht.

Durch die Weiterbildung des Verfahrens gemäß Patentanspruch 7 wird aus der Bild-Transformationsmatrix gemäß dem erfindungsgemäßen Verfahren durch Festlegung des Wertes der Pixelkorrelationen auf den Wert 1 eine formangepasste zweidimensionale Cosinus-Transformation bestimmt.

Ferner ist es vorteilhaft, zur Codierung der einzelnen Koeffizienten eines unter Verwendung der Bild-Transformationsmatrix transformierten Bildsegments die Koeffizienten nach fallenden Eigenwerten zu sortieren. Dies spart in erheblichem Maße benötigte Übertragungsrate bei der Übertragung der einzelnen Koeffizienten ein, da der Aufwand zur Codierung von Zwischenräumen, in denen nur „Null-Koeffizienten" vorkommen, erheblich reduziert wird, da erheblich weniger Null-Koeffizienten zwischen den einzelnen Koeffizienten existieren..

In den Figuren ist ein Ausführungsbeispiel des erfindungsgemäßen Verfahrens dargestellt, welches im weiteren näher erläutert wird.

Es zeigen

Fig. 1     ein Ablaufdiagramm, in dem die einzelnen Verfahrensschritte des erfindungsgemäßen Verfahrens dargestellt sind;

Fig. 2     eine Skizze, in der ein Bild mit einzelnen Bildpunkten und einem Bildsegment beispielhaft dargestellt ist,

Fig. 3     eine Anordnung mit einer Kamera, zwei Rechnern und zwei Bildschirmen;

Fig. 4     ein Ablaufdiagramm, in dem zusätzliche Verfahrensschritte von Weiterbildungen des erfindungsgemäßen Verfahrens dargestellt sind.

Für das erfindungsgemäße Verfahren wird die Annahme eines separierbaren, zweidimensionalen Markoff-Prozesses erster Ordnung als Bildmodell für Bildpunkte BP des jeweiligen digitalen Bildes B getroffen. Die Bildpunkte BP sind Elemente eines beliebigen, auch nicht konvexen oder mehrfach zusammenhängenden Bildsegments S beliebiger Form.

Bei dem erfindungsgemäßen Verfahren wird in einem ersten Schritt 101 eine vorgebbare Scan-Reihenfolge für die Bildpunkte BP des jeweiligen Bildsegments S, welches eine beliebige Anzahl von Bildpunkten BP aufweist, bestimmt. Diese kann beispielsweise darin bestehen, daß die einzelnen Bildpunkte BP des Bildsegments S zeilenweise gescannt werden. Dieses beispielhaft dargestellte zeilenweise Scannen dient jedoch lediglich zur Vereinfachung des erfindungsgemäßen Verfahrens und schränkt die Allgemeingültigkeit der Scan-Reihenfolgen in keinster Weise ein. Die Scan-Reihenfolge kann beliebig festgesetzt werden.

Für das Bildsegment S wird nun eine "segmentspezifische" Kovarianzmatrix $\underline{R}$ ermittelt 102. Dies geschieht, indem die zuvor festgelegte Scan-Reihenfolge berücksichtigt wird bei der Bildung der Kovarianzmatrix $\underline{R}$, die zur Scan-Reihenfolge korrespondiert. Eine erste Zeile der Kovarianzmatrix $\underline{R}$ erhält man, indem man zu einem ersten Bildpixel $x_{ij}$ des Bildsegmentes S zu allen Bildpunkten BP des Bildsegments S eine Kovarianzfunktion $R(x_{ij}, x_{kl})$ auswertet. Hierbei wird mit einem ersten Zeilenindex i und einem ersten Spaltenindex j die Koordinatenposition eines ersten Bildpunkts $x_{ij}$ beschrieben. Mit einem zweiten Zeilenindex k und einem zweiten Spaltenindex l wird jeweils die Koordinatenposition aller weiteren Bildpunkte BP des Bildsegmentes S beschrieben.

Die Reihenfolge der Auswahl des ersten Bildpunkts $x_{ij}$ und eines zweiten Bildpunkts $x_{kl}$ bei der Bildung der Kovarianzmatrix $\underline{R}$ erfolgt entsprechend der zuvor festgelegten Scan-Reihenfolge. Die Zahl der Elemente in der ersten Zeile der Kovarianzmatrix $\underline{R}$ entspricht damit gerade der Zahl der Bildpunkte BP innerhalb des Bildsegments S. Die Bestimmung einer zweiten Zeile der Kovarianzmatrix $\underline{R}$ erfolgt analog, wie auch die Bestimmung aller weiteren Zeilen der Kovarianzmatrix $\underline{R}$. Bei der zweiten Zeile der Kovarianzmatrix $\underline{R}$ wird der zweite Bildpunkt $x_{kl}$ "festgehalten" und wiederum die Kovarianzfunktion $R(x_{ij}, x_{kl})$ zu allen weiteren Bildpunkten BP bestimmt.

Diese Vorgehensweise wird für alle n Zeilen der Kovarianzmatrix $\underline{R}$ durchgeführt, wobei die Zahl n gleichzeitig die Anzahl der Bildpunkte BP in dem Bildsegment S des Bildes B darstellt.

Eine Bild-Transformationsmatrix $\underline{A}^T$ wird dann zeilenweise aus den Eigenvektoren der Kovarianzmatrix $\underline{R}$ bestimmt. Dies bedeutet, daß die Basisfunktionen der Transformation den Eigenvektoren der Kovarianzmatrix $\underline{R}$ entsprechen.

Es sind dem Fachmann verschiedene Möglichkeiten zur Ermittlung der Eigenvektoren der Kovarianzmatrix $\underline{R}$

bekannt, beispielsweise aus dem Dokument [4].

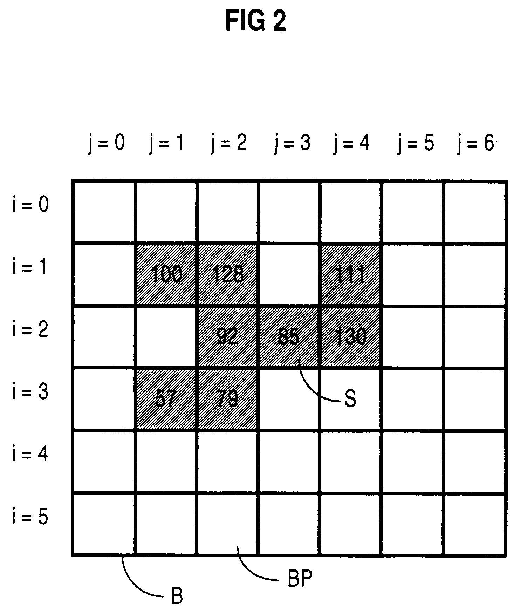

In Fig. 2 ist ein sehr einfaches Beispiel eines Bildes B, welches eine beliebige Anzahl von Bildpunkten BP aufweist, und ein Bildsegment S mit n Bildpunkten innerhalb des Bildes B dargestellt.

Den Bildpunkten BP ist jeweils in Form eines Zahlenwertes, der üblicherweise zwischen 1 und 255 liegt, ein Helligkeitswert und/oder ein Farbwert zugeordnet, durch den die Helligkeit und/oder die Farbe des jeweiligen Bildpunktes BP angegeben wird.

In Fig. 2 ist jeder Bildpunkt BP, der sich in dem Bildsegment S befindet, durch eine Schraffur gekennzeichnet.

Zur Verdeutlichung des im vorigen beschriebenen erfindungsgemäßen Verfahrens wird dieses Verfahren mit den Zahlenwerten, die in Fig. 2 beispielhaft für das Bildsegment S in dem Bild B dargestellt sind, beschrieben. Dieses triviale Beispiel soll jedoch lediglich die Vorgehensweise verdeutlichen und schränkt die Allgemeingültigkeit des erfindungsgemäßen Verfahrens in keinster Weise ein.

Die Helligkeitswerte werden zunächst in einer beliebigen, aber festen Scan-Reihenfolge, in diesem Beispiel zeilenweise zu einem Bildpunktvektor $\underline{x}$ zusammengefaßt. Der Bildpunktvektor $\underline{x}$ ergibt sich demnach zu

$$\underline{x} = (x_{11}, x_{12}, x_{14}, x_{22}, x_{23}, x_{24}, x_{31}, x_{32})^T =$$
$$= (100, 128, 111, 92, 85, 130, 57, 79)^T.$$

Mit den beiden tiefgestellten Idizes bei jeder Komponente des Bildpunktvektors $x_{ij}$ werden jeweils die einzelnen Bildpunkte BP innerhalb des Bildes B durch den ersten Zeilenindex i sowie den ersten Spaltenindex j eindeutig gekennzeichnet. Der erste Zeilenindex i ist in dem Beispiel von Fig. 2 eine Zahl zwischen 0 und 5, allgemein zwischen 0 und m-1, wobei mit m die Anzahl von Bildzeilen des Bildes B bezeichnet wird. Der erste Spaltenindex j ist in dem in Fig. 2 dargestellten Bild B eine Zahl zwischen 0 und 6, allgemein jedoch eine Zahl zwischen 0 und t-1, wobei mit t die Anzahl von Bildspalten des Bildes B bezeichnet wird.

Die einzelnen Elemente der Kovarianzmatrix $\underline{R}$ werden mit Hilfe einer Kovarianzfunktion $R(x_{ij}, x_{kl})$ ermittelt. Dem Fachmann sind verschiedenste Kovarianzfunktionen bekannt. Zur einfachen Darstellung des erfindungsgemäßen Verfahrens wird eine Bildung der Elemente der Kovarianzmatrix $\underline{R}$ auf Basis der folgenden Kovarianzfunktion $\underline{R}$ dargestellt:

$$R(x_{ij}, x_{kl}) = r^{|i-k|+|j-l|} \tag{1}.$$

Hierbei bezeichnet r eine beliebige Zahl mit $|r| \leq 1$.

Unter Verwendung dieser Kovarianzfunktion $\underline{R}$ ergibt sich für die Kovarianzmatrix $\underline{R}$ bei dem gewählten Zahlenbeispiel aus Figur 2:

$$\underline{R} = \begin{bmatrix} 1 & r & r^3 & r^2 & r^3 & r^4 & r^2 & r^3 \\ r & 1 & r^2 & r & r^2 & r^3 & r^3 & r^2 \\ r^3 & r^2 & 1 & r^3 & r^2 & r & r^5 & r^4 \\ r^2 & r & r^3 & 1 & r & r^2 & r^2 & r \\ r^3 & r^2 & r^2 & r & 1 & r & r^3 & r^2 \\ r^4 & r^3 & r & r^2 & r & 1 & r^4 & r^3 \\ r^2 & r^3 & r^5 & r^2 & r^3 & r^4 & 1 & r \\ r^3 & r^2 & r^4 & r & r^2 & r^3 & r & 1 \end{bmatrix}$$

Es ergibt sich beispielsweise für das erste Element in der ersten Zeile der Kovarianzmatrix $\underline{R}$ der Wert der Kovarianzfunktion $R(x_{11}, x_{11}) = R^{|1-1| + |1-1|} = 1$.

Für die Ermittlung der Eigenvektoren aus der Kovarianzmatrix $\underline{R}$ sind dem Fachmann verschiedenste Verfahren bekannt, die ohne Einschränkungen in dem erfindungsgemäßen Verfahren eingesetzt werden können.

Werden die Eigenvektoren in aufsteigender Reihenfolge nach der Größe der Eigenwerte sortiert, was für das erfindungsgemäße Verfahren in keinster Weise notwendig ist, dann folgt für das hier dargestellte einfache Beispiel für einen vorgegebenen Wert r=0,95 für die Bild-Transformationsmatrix $\underline{A}^T$:

$$\underline{A}^T = \begin{bmatrix}
-0.3175 & 0.6326 & -0.3242 & -0.3284 & 0.0003 & 0.3210 & 0.3105 & -0.2942 \\
0.3958 & -0.0072 & -0.3804 & -0.4294 & 0.0030 & 0.3858 & -0.4102 & 0.4439 \\
0.0766 & -0.0848 & -0.1772 & 0.5289 & -0.6393 & 0.4895 & -0.0339 & -0.1624 \\
0.3711 & 0.2890 & -0.3967 & 0.1468 & 0.5282 & 0.1021 & 0.0806 & -0.5514 \\
-0.2064 & 0.4306 & -0.3112 & 0.4957 & 0.2389 & -0.2363 & -0.5544 & 0.0953 \\
0.6164 & 0.4394 & 0.2397 & -0.1290 & -0.2829 & -0.3027 & -0.1960 & -0.3780 \\
0.2324 & 0.0424 & -0.5362 & 0.1089 & -0.2153 & -0.4775 & 0.5121 & 0.3290 \\
0.3500 & 0.3590 & 0.3458 & 0.3636 & 0.3590 & 0.3502 & 0.3459 & 0.3546
\end{bmatrix}$$

Mit der Bild-Transformationsmatrix $\underline{A}^T$ kann nun der jeweilige Bildpunktvektor $\underline{x}$ des Bildsegments S transformiert werden, wobei die einzelnen Bildpunkte BP vollständig linear dekorreliert werden.

Für einen dekorrelierten Bildpunktvektor $\underline{y}$, der durch Transformation des Bildpunktvektors $\underline{x}$ mit der Bild-Transformationsmatrix $\underline{A}^T$ ermittelt, ergibt sich für das hier dargestellte Zahlenbeispiel:

$$\underline{y} = \underline{A}^T\underline{x} = (19.0206\ 19.2285\ 20.3278\ -11.2088\ 11.0457\ 28.1784\ -46.0299\ 27.5481)$$

Eine weitere von vielen Möglichkeiten zur Ermittlung der einzelnen Elemente der Kovarianzmatrix $\underline{R}$, also ein Möglichkeit der Kovarianzfunktion $R(x_{ij}, x_{kl})$ ergibt sich durch folgende Vorschrift:

$$R(x_{ij}, x_{kl}) = r^{\sqrt{(i+k)^2+(j-l)^2}} \tag{2}$$

Die Kovarianzfunktion $R(x_{ij}, x_{kl})$ nach Gleichung (1) weist jedoch die Vorteile auf, daß zum einen die Richtungen der einzelnen Bildpunkte BP entkoppelt werden und damit eine Parallelisierung der Ermittlung der Elemente der Kovarianzmatrix $\underline{R}$ möglich wird, was zu einer beschleunigten Durchführung des erfindungsgemäßen Verfahrens führt.

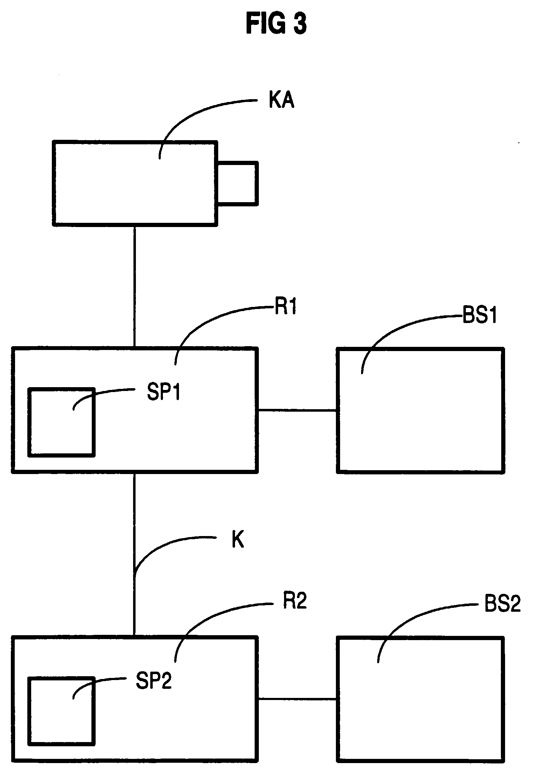

In Fig.3 ist u. a. ein Rechner R1 dargestellt, mit dem das erfindungsgemäße Verfahren notwendigerweise durchgeführt wird.

Ferner ist in Fig. 3 eine Kamera KA dargestellt, mit der eine Folge von Bildern aufgenommen wird, welche in dem Rechner R1 zu einer Folge von digitalen Bildern B umgewandelt wird. Diese digitalen Bilder B werden in einem Speicher SP1 des Rechners R1 gespeichert. Ferner ist in dieser Anordnung für den Rechner R1 ein Bildschirm BS1 vorgesehen.

Bei einer Übertragung des digitalisierten Bildes B wird vor der Übertragung des digitalisierten Bildes B eine Bildtransformation unter Verwendung der erfindungsgemäß gebildeten Bild-Transformationsmatrix $\underline{A}^T$ durchgeführt. Weiterhin ist ein zweiter Rechner R2 mit einem zweiten Speicher SP2 und einem zweiten Bildschirm BS2 vorgesehen, der über einen Kanal K mit dem Rechner R1 gekoppelt ist.

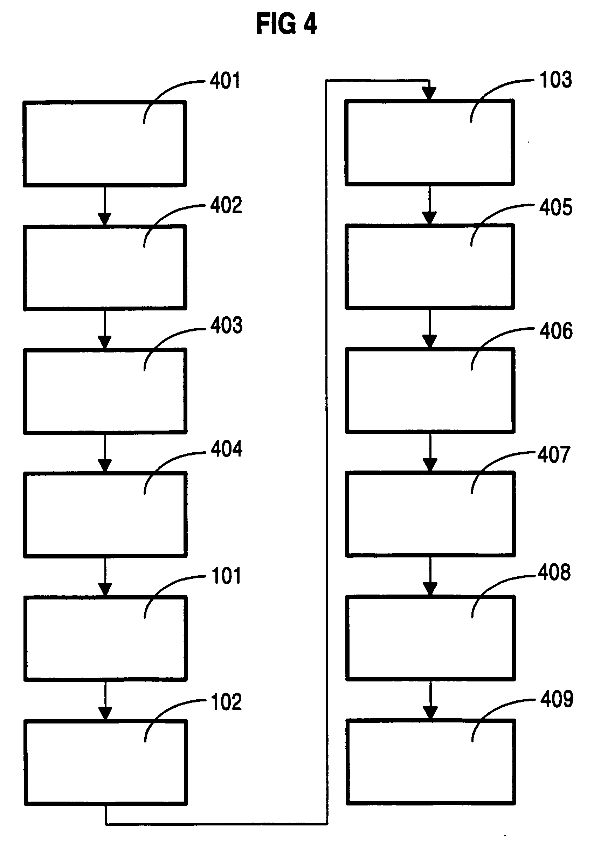

In Fig. 4 sind einige zusätzliche Verfahrensschritte von Weiterbildungen des erfindungsgemäßen Verfahrens dargestellt. Mit der Kamera KA werden beispielsweise ein oder mehrere Bilder aufgenommen 401. Das Bild, bzw. die Bilder werden in dem Rechner R1 digitalisiert 402, wobei den einzelnen Bildpunkten BP des Bildes B Helligkeitswerte zugeordnet werden 403. Das digitalisierte Bild B wird nun in einzelne Bildsegmente S aufgeteilt 404.

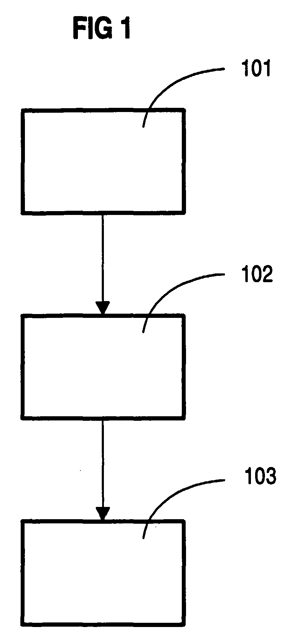

Für die einzelnen Bildsegmente S wird jeweils erfindungsgemäß eine segmentspezifische Bild-Transformationsmatrix $\underline{A}^T$ auf die in Fig. 1 dargestellte Weise mit den Schritten 101, 102, sowie 103 gebildet.

Der Bildpunktvektor $\underline{x}$ wird mit der Bild-Transformationsmatrix $\underline{A}^T$ zu dem dekorrelierten Bildpunktvektor $\underline{y}$ transformiert 405. Die daraus resultierenden Koeffizienten, also die Komponenten des dekorrelierten Bildpunktvektors $\underline{y}$ werden von dem Rechner R1 über den Kanal K zu dem zweiten Rechner R2 übertragen 406. In dem zweiten Rechner R2 werden die Koeffizienten empfangen 407 und entsprechend der inversen Bild-Transformationsmatrix $(\underline{A}^T)^{-1}$ invers transformiert 408. Mittels der nun wieder ermittelten rekonstruierten Bildpunktvektoren $\underline{x}$ wird das digitalisierte Bild B rekonstruiert 409. Dieses Bild wird einem Benutzer auf dem zweiten Bildschirm BS2 oder auf dem ersten Bildschirm BS1 dargestellt.

Ferner ist es in einer Weiterbildung des Verfahrens vorteilhaft, die Koeffizienten der Bild-Transformationsmatrix $\underline{A}^T$ nach fallenden Eigenwerten zu sortieren. Durch diese Vorgehensweise wird eine erhebliche Menge an Übertragungskapazität eingespart. Üblicherweise werden die mit einer beliebigen Bild-Transformationsmatrix transformierten Koeffizienten des Bildsegments S einer Quantisierung und einem anschließenden Scan-Verfahren unterzogen. Dabei werden durch die Quantisierung entstandene Null-Koeffizienten in der Weise codiert, daß zwischen den Koeffizienten, deren Werte ungleich Null sind, die Anzahl von Null-Koeffizienten als eine natürliche Zahl codiert wird. Liegt zwischen zwei „Nicht-Null-Koeffizienten" eine große Anzahl von Null-Koeffizienten, so wird zur Codierung dieser natürlichen Zahl eine erhebliche Anzahl von Bits benötigt, die ja auch übertragen werden müssen. Durch die Sortierung nach fallenden Eigenwerten wird die Anzahl von Null-Koeffizienten zwischen Nicht-Null-Koeffizienten erheblich reduziert. Damit wird auch der Bedarf an Übertragungsrate, der zur Codierung der großen natürlichen Zahlen vorhanden ist, erheblich reduziert.

In diesem Dokument wurden folgende Veröffentlichungen zitiert:

[1] M. Gilge, T. Engelhardt und R. Mehlan, Coding of arbitrarily shaped image segments based on a generalized orthogonal transform, Signal Processing: Image Communication 1, S. 153-180, Oktober 1989

[2] T. Sikora und Béla Makai, Shape-adaptive DCT for generic coding of video, IEEE Trans. Circuits and Systems for Video Technology 5, S. 59-62, Februar 1995

[3] T. Sikora, S. Bauer und Béla Makai, Efficiency of shape-adaptive 2-D transforms for coding of arbitrary shaped image segments, IEEE Trans. Circuits and Systems for Video Technology 5, S. 254-258, Juni 1995

[4] W. H. Press, S. Teukolsky und W. Vetterling, Numerical Recipes in Pascal, Cambridge University Press, S. 375 - 389, 1992

[5] J.-R. Ohm, Digitale Bildcodierung, Berlin, Springer Verlag, ISBN 3-540-58579-6, S. 46 - 51 und S. 72 - 77, 1995

[6] M. Dekker, BOW "Pattern Recognition" Inc. 1984, S. 213 - 217

[7] Ernst, Einführung in die digitale Bildverarbeitung, Franzis-Verlag, 1991, S. 250 - 252

**Patentansprüche**

1. Verfahren zur Bildung einer Bild-Transformationsmatrix ($\underline{A}^T$) für ein beliebig geformtes Bildsegment (S), welches eine beliebige Anzahl von Bildpunkten (BP) aufweist, eines digitalen Bildes (B), durch einen Rechner (R1),

   - bei dem für die Bildpunkte (BP) eine vorgebbare Scan-Reihenfolge der Bildpunkte (BP) bestimmt wird(101),
   - bei dem entsprechend der Scan-Reihenfolge eine Kovarianzmatrix ($\underline{R}$) für die Bildpunkte (BP) ermittelt wird (102), und
   - bei dem aus der Kovarianzmatrix ($\underline{R}$) durch Bestimmung der Eigenvektoren der Kovarianzmatrix ($\underline{R}$) die Bild-Transformationsmatrix ($\underline{A}^T$) ermittelt wird.

2. Verfahren nach Anspruch 1,

   - bei dem den Bildpunkten Helligkeitswerte und/oder Farbwerte zugeordnet werden, und
   - bei dem aus den Helligkeitswerten und/oder Farbwerte entsprechend der Scan-Reihenfolge ein Bildpunkt-Vektor gebildet wird,
   - bei dem der Bildpunkt-Vektor mit der Bild-Transformationsmatrix transformiert wird in einen dekorrelierten Bildpunkt-Vektor.

3. Verfahren nach Anspruch 1 oder 2,

   bei dem ein Bild mit einer Kamera aufgenommen wird,
   bei dem das Bild in Bildsegmente aufgeteilt wird, und
   bei dem der dekorrelierte Bildpunkt-Vektor von dem Rechner zu einem zweiten Rechner übertragen wird,
   bei dem der dekorrelierte Bildpunkt-Vektor invers transformiert wird,
   bei dem ein digitales Rekonstruktionsbild rekonstruiert wird,
   bei dem das digitale Rekonstruktionsbild auf einem Bildschirm dargestellt wird.

4. Verfahren nach einem der Ansprüche 1 bis 3,

   bei dem die Scan-Reihenfolgen jeweils durch ein Scannen entlang einer Bildzeile festgelegt wird.

5. Verfahren nach einem der Ansprüche 1 bis 4, bei dem die Elemente der Kovarianzmatrix ermittelt werden nach der folgenden Vorschrift:

$$R(x_{ij}, x_{kl}) = r^{|i-k|+|j-l|},$$

wobei mit

$R(x_{ij}, x_{kl})$      jeweils ein Wert der Kovarianzmatrix bezeichnet wird,
$i, j, k, l$      jeweils Spaltenindizes bzw. Zeilenindizes bezeichnet werden.

6. Verfahren nach einem der Ansprüche 1 bis 4, bei dem die Elemente der Kovarianzmatrix ermittelt werden nach der folgenden Vorschrift:

$$R(x_{ij}, x_{kl}) = r^{\sqrt{(i+k)^2+(j-l)^2}},$$

wobei mit

$R(x_{ij}, x_{kl})$      jeweils ein Wert der Kovarianzmatrix bezeichnet wird,
$i, j, k, l$      jeweils Spaltenindizes bzw. Zeilenindizes bezeichnet werden.

7. Verfahren nach einem der Ansprüche 1 bis 6, bei dem die Elemente der Kovarianzmatrix R normiert werden.

8. Verfahren nach einem der Ansprüche 1 bis 7, bei dem die Koeffizienten der Bild-Transformationsmatrix $\underline{A}^T$ nach fallenden Eigenwerten sortiert werden.

# FIG 1

101

102

103

# FIG 2

# FIG 3

## FIG 4